# EUROPEAN PATENT APPLICATION

(11) **EP 4 582 717 A1**
(43) Date of publication of application: **09.07.2025**
(21) Application number: 22956708.6
(22) Date of filing: 29.08.2022
(51) Int. Cl.: F16F 9/46, F16F 9/34

(54) **VALVE CORE ASSEMBLY AND BUILT-IN ELECTRONICALLY CONTROLLED SHOCK ABSORBER COMPRISING SAME**

(71) Applicant: SAIC MOTOR Corporation Limited, Shanghai 201203 (CN)
(72) Inventor: WANG, Shenxu, Shanghai 201203 (CN); DAI, Yiliang, Shanghai 201203 (CN); LIU, Fei, Shanghai 201203 (CN); DING, Chuan, Shanghai 201203 (CN); PENG, Hongming, Shanghai 201203 (CN); ZHENG, Chang, Shanghai 201203 (CN)
(74) Representative: Berggren Oy
(86) International application number: PCT/CN2022/115411
(87) International publication number: WO 2024/044872

(57) **Abstract**

**The** invention provides a valve core assembly for a built-in electronically-controlled shock absorber. **The** valve core assembly includes a through-flow assembly arranged in a valve core sheath. **The** through-flow assembly includes: a valve body, wherein one side, in an axial direction of the valve core assembly, of the valve body abuts against an electromagnetic valve assembly, the valve body is detachably fixed relative to the valve core sheath, and the valve body is provided with a flowing channel that is in fluid communication with a sheath through hole; and a moving member that extends in the axial direction in a fluid-tight manner and penetrates at least part of the valve body so as to transversely penetrate the flowing channel and that is provided with a moving member through hole extending in a radial direction. **The** moving member is capable of reciprocating in the axial direction under the action of an electromagnetic force generated by the electromagnetic valve assembly, such that a size of a through-flow section of the flowing channel of the valve body can be changed. The invention further provides a built-in electronically-controlled shock absorber with the valve core assembly. With the above structure, the electronically-controlled shock absorber can have a large adjustment range of a damping force, a compact structure, and higher response sensitivity.

## Description

### Technical Field

The invention relates to a valve core assembly for a built-in electronically-controlled shock absorber, and a built-in electronically-controlled shock absorber including the valve core assembly.

### Background

In the field of electronically-controlled shock absorbers, it is desirable that an adjustment range of a damping force of an electronically-controlled shock absorber can be as large as possible, to satisfy more application demands. Further, due to a large radial size of some components (such as an ejector pin and a guide column) in a conventional built-in electronically-controlled shock absorber, the electronically-controlled shock absorber has a large radial size, which increases space occupied by the electronically-controlled shock absorber during use. Thus, its application scope is limited to some extent. In addition, because of the components arranged in the built-in electronically-controlled shock absorber, response sensitivity of the electronically-controlled shock absorber obtained is low.

Thus, there is a need for a built-in electronically-controlled shock absorber featuring a large adjustment range of a damping force, a compact structure and high response sensitivity.

Moreover, in consideration of specific use (for instance, use in vehicles with specific requirements), a built-in electronically-controlled shock absorber offering higher comfort than the above electronically-controlled shock absorber is required.

### Summary

In order to achieve at least one of the objectives, the invention provides a valve core assembly for a built-in electronically-controlled shock absorber. The valve core assembly includes: a valve core sheath provided with a sheath through hole extending in a radial direction of the valve core assembly, so as to enable fluid communication between an internal space and an external space of the valve core sheath; an electromagnetic valve assembly arranged in the valve core sheath; a through-flow assembly arranged in the valve core sheath; and a piston assembly that abuts against a side of a valve body away from the electromagnetic valve assembly and is detachably fixed relative to the valve core sheath, such that working fluid is allowed to penetrate the piston assembly for reciprocation. The through-flow assembly includes: the valve body, wherein a side, in an axial direction of the valve core assembly, of the valve body abuts against the electromagnetic valve assembly, the valve body is detachably fixed relative to the valve core sheath, the valve body is provided with a flowing channel, and the flowing channel is in fluid communication with the sheath through hole, such that the external space is in fluid communication with a lower space below the valve body; and a moving member that extends in the axial direction in a fluid-tight manner and penetrates at least part of the valve body so as to transversely penetrate the flowing channel and that is provided with a moving member through hole extending in the radial direction. The moving member is capable of reciprocating in the axial direction under the action of an electromagnetic force generated by the electromagnetic valve assembly, such that a size of a through-flow section of the flowing channel of the valve body is changed.

According to one embodiment of the invention, the moving member is in a form of a sliding sheet. The sliding sheet is capable of moving between a maximum through-flow position and a minimum through-flow position. When the sliding sheet is located at the maximum through-flow position, the moving member through hole is in complete communication with the fluid channel and is not blocked. When the sliding sheet is located at the minimum through-flow position, the moving through hole is completely blocked by a wall of the valve body. And/or
the electromagnetic valve assembly includes: an armature capable of reciprocating in the axial direction under the action of the electromagnetic force, and provided with an armature through hole extending in the axial direction, such that an upper space of the armature is in fluid communication with the lower space of the armature; and an elastic member arranged in the electromagnetic valve assembly, so as to apply a force opposite to the electromagnetic force to the armature. A first end of the moving member in the axial direction is fixedly connected to the armature.

Further, a side of the armature facing the valve body is provided with a receiving part configured to receive the first end of the moving member in a fixed manner. Or, the first end of the moving member is directly fixed to a side of the armature facing the valve body.

Optionally, the armature through hole deviates from an axis of the valve core assembly. Or, the armature through hole is a central through hole of the armature.

According to another embodiment of the invention, the moving member through hole is a single through hole, or a through hole array composed of a plurality of through holes; and/or, a hole-forming direction of the moving member through hole and a flowing direction of the working fluid in the flowing channel are parallel to each other or form an angle.

According to yet another embodiment of the invention, the flowing channel of the valve body includes: a radial section that extends in the radial direction and is provided with a first end in fluid communication with the sheath through hole, wherein the radial section divides the valve body into an upper section located above the radial section and a lower section located below the radial section; and an axial section that extends in the axial direction and is provided with a first end in fluid communication with a second end, opposite the first end, of the radial section and a second end in fluid communication with the lower space below the valve body.

Optionally, the moving member extends in the axial direction and penetrates the valve body. Or, a second end, opposite the first end, of the moving member is received in a recess of the valve body. The recess is provided on the lower section.

Optionally, the lower section of the valve body is provided with at least one dividing through hole extending in the axial direction on a side of the moving member close to the sheath through hole. Each of the at least one dividing through hole enables fluid communication between the radial section and the lower space below the valve body. The valve core assembly further includes an adjusting assembly. The adjusting assembly abuts against a side of the valve body facing away from the electromagnetic valve assembly. The adjusting assembly includes: a main body provided with a flowing hole deviating from a center of the main body, wherein the flowing hole extends in the axial direction to penetrate the main body, and is in fluid communication with the axial section of the flowing channel; and an adjusting mechanism located below the at least one dividing through hole, and capable of enabling fluid communication between a space below the adjusting assembly and the at least one dividing through hole in a same mode as a working mode of the piston assembly.

Further, the main body of the valve body is provided with a recess at a position without the flowing hole. The recess is concave relative to a side of the valve body facing the electromagnetic valve assembly. The adjusting mechanism is arranged at the recess.

According to still another embodiment of the invention, the lower section of the valve body is provided with an adjusting mechanism on a side of the moving member close to the sheath through hole. The adjusting mechanism is capable of enabling fluid communication between a space below the adjusting mechanism and the radial section in a same mode as a working mode of the piston assembly.

Further, a side of the lower section of the valve body facing the radial section is provided with a recess. The recess is configured to arrange the adjusting mechanism.

Optionally, the adjusting mechanism includes: a first assembly, wherein the first assembly is capable of achieving a flow blocking function in a travel recovery process of the electronically-controlled shock absorber and a flow dividing function in a travel compression process of the electronically-controlled shock absorber; and a second assembly located below the first assembly, wherein the second assembly is capable of achieving a flow blocking function in the travel compression process and a flow dividing function in the travel recovery process. The second assembly and the first assembly are fixed to the main body along a same axis, or are fixed to the main body in a mutually-deviating manner.

The invention further provides a built-in electronically-controlled shock absorber. The built-in electronically-controlled shock absorber includes: a cylinder tube; any one of the above valve core assemblies, wherein the valve core assembly is arranged such that at least part of an outer wall of a piston assembly is in close contact with an inner wall of the cylinder tube, and further the valve core assembly is switched back and forth between a compression travel and a recovery travel of the electronically-controlled shock absorber relative to the cylinder tube; and a hollow piston rod connected with the valve core assembly, where a power line penetrates a hollow rod cavity of the hollow piston rod and is configured to supply power to an electromagnetic valve assembly of the valve core assembly.

With the valve core assembly and the built-in electronically-controlled shock absorber with same according to the invention, the electronically-controlled shock absorber can have a large adjustment range of a damping force, a compact structure, and higher response sensitivity.

### Brief Description of the Drawings

In the drawings, same or similar reference numerals denote same or similar components. Orientations shown in the drawings are only illustrative, and are not intended to limit use directions of an electronically-controlled shock absorber. The drawings need not be drawn to scale, and can be partially enlarged to highlight parts to be emphasized. In the drawings:
Fig. 1 shows a schematic structural diagram of a principal body of a built-in electronically-controlled shock absorber according to the invention;
Figs. 2(a) and 2(b) show sectional views of one embodiment of a valve core assembly used in the built-in electronically-controlled shock absorber shown in Fig. 1, wherein cases that an elastic member is arranged above an armature and an elastic member is arranged between an armature and a valve body are shown;
Figs. 3(a) and 3(b) show solid diagrams of one instance of an armature used in the valve core assembly shown in Fig. 2(a) from a top view and a bottom view, respectively;
Fig. 4 shows a solid diagram of one embodiment of a moving member of a through-flow assembly used in the valve core assembly shown in Figs. 2(a) and 2(b);
Figs. 5(a) and 5(b) show solid diagrams of one instance of a valve body of a through-flow assembly used in the valve core assembly shown in Figs. 2(a) and 2(b) from a top view and a bottom view, respectively;
Figs. 6(a), 6(b) and 6(c) show sectional views of several alternative embodiments of the valve body shown in Figs. 5(a) and 5(b), respectively;
Fig. 7 shows a top view of a relative arrangement relation between the moving member shown in Fig. 4 and a flowing channel in the through-flow assembly, showing several illustrative cases of the arrangement relation therebetween;
Figs. 8(a) and 8(b) show schematic diagrams of flowing principles of working fluid in the valve core assembly shown in Fig. 2(a) in travel compression and travel recovery processes of an electronically-controlled shock absorber, respectively;
Fig. 9 shows a sectional view of another example of the valve core assembly shown in Fig. 2(a), where an adjusting assembly is added;
Figs. 10(a) and 10(b) show solid diagrams of a main body of an adjusting assembly used in the valve core assembly shown in Fig. 9 from a top view and a bottom view, respectively;
Fig. 11 shows a sectional view of another embodiment of an adjusting assembly used in the valve core assembly shown in Fig. 9;
Figs. 12(a) and 12(b) show schematic diagrams of flowing principles of working fluid in the valve core assembly shown in Fig. 9 in travel recovery and travel compression processes of an electronically-controlled shock absorber, respectively; and
Fig. 13 shows a sectional view of an alternative embodiment of the valve core assembly shown in Fig. 9, wherein another arrangement of an adjusting assembly is shown.

### Detailed Description of the Embodiments

A built-in electronically-controlled shock absorber of the invention will be described below in conjunction with the accompanying drawings.

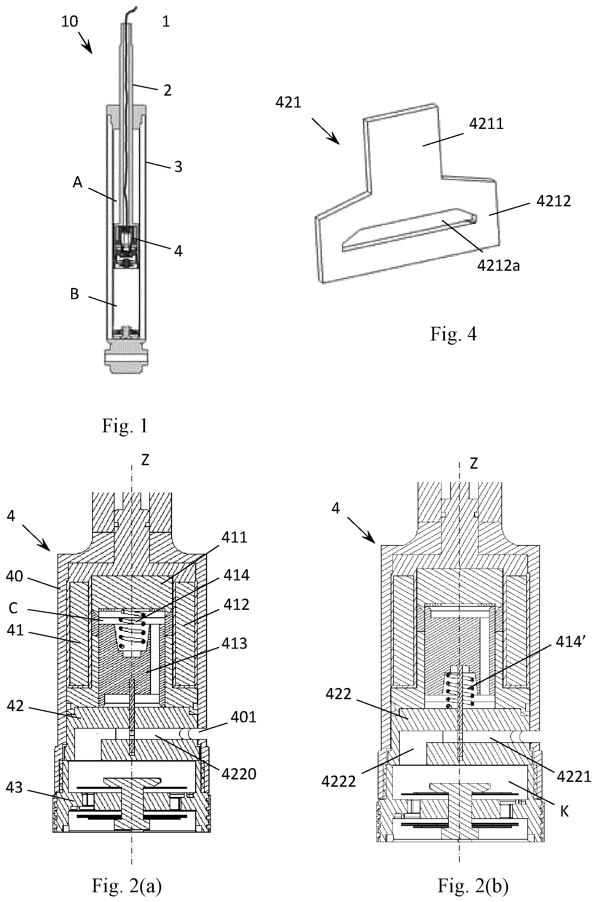

With reference to Fig. 1, the built-in electronically-controlled shock absorber 10 includes a power line 1, a hollow piston rod 2, a cylinder tube 3, and a valve core assembly 4. The power line 1 penetrates a hollow rod cavity of the piston rod 2 and is connected to the valve core assembly 4 for power supply. The valve core assembly 4 may be connected to the piston rod 2 in a manner well known to those skilled in the art (for instance, a detachable manner such as a threaded connection manner or a non-detachable manner such as a friction welding manner). Thus, the valve core assembly may reciprocate between an upward recovery travel (with reference to the orientation shown in Fig. 1) and a downward compression travel (with reference to the orientation shown in Fig. 1) along with the piston rod 2. The valve core assembly 4 is arranged in an internal space of the cylinder tube 3. The internal space is divided into space A located above the valve core assembly 4 and space B located below the valve core assembly. The spaces A and B and the valve core assembly 4 are filled with working fluid (for instance, oil). Although the shock absorber is shown as a double-tube type in Fig. 1, it should be understood by those skilled in the art that the shock absorber may also be a single-tube shock absorber. Thus, the cylinder tube 3 may be either a single cylinder tube or a double cylinder tube hereinafter.

Figs. 2(a) and 2(b) show two embodiments of the valve core assembly 4 used in the built-in electronically-controlled shock absorber shown in Fig. 1, respectively. The valve core assembly 4 mainly includes a valve core sheath 40, an electromagnetic valve assembly 41, a through-flow assembly 42, and a piston assembly 43. A circumferential wall of the valve core sheath 40 is provided with a radial through hole (hereinafter referred to as a sheath through hole) 401 configured to enable fluid communication between an internal space and an external space (including the space A) of the valve core sheath 40. The sheath through holes 401 may be a plurality of through holes uniformly provided at a same axial height. Preferably, the sheath through hole 401 is a single through hole having a certain extension length in a circumferential direction of the valve core sheath 40. The electromagnetic valve assembly 41 and the through-flow assembly 42 are arranged in a hollow chamber defined in the valve core sheath 40 in a manner of abutting against each other. Clearly, those skilled in the art know that outer diameters of the assemblies (for instance, the electromagnetic valve assembly 41 and the through-flow assembly 42) arranged in the hollow chamber are approximately the same as an inner diameter of the hollow chamber, such that the assemblies do not substantially move radially in the hollow chamber. The piston assembly 43 is attached to the valve core sheath 40 in a detachable manner such as a threaded connection manner, such that the electromagnetic valve assembly 41 and the through-flow assembly 42 are fixed relative to the valve core sheath 40 in an axial direction. Moreover, the piston assembly 43 is arranged such that at least part of an outer wall of the piston assembly is in close contact with an inner wall of the cylinder tube 3, and further the valve core assembly 4 reciprocates between a compression travel and a recovery travel of the electronically-controlled shock absorber relative to the cylinder tube 3.

The electromagnetic valve assembly 41 mainly includes a cup-shaped supporting ring 411, a solenoid 412 sleeving the supporting ring 411, and an armature 413 and an elastic biasing member (for instance, an upper spring 414 shown in Fig. 2(a) and a lower spring 414' shown in Fig. (b)) that are arranged in internal space C of the supporting ring 411. Figs. 2(a) and 2(b) show cases that an electromagnetic force applied by the electromagnetic valve assembly 41 is upward and downward in the axial direction Z, respectively. In Fig. 2(a), the elastic biasing member in a form of a spring is arranged in the internal space C of the supporting ring 411 and located between a top wall of the supporting ring 411 and the armature 413, so as to isolate the supporting ring from the armature. In Fig. 2(b), the elastic biasing member is arranged between the armature 413 and the valve body 422 of the through-flow assembly 42 (described in detail below), so as to isolate the armature from the valve body.

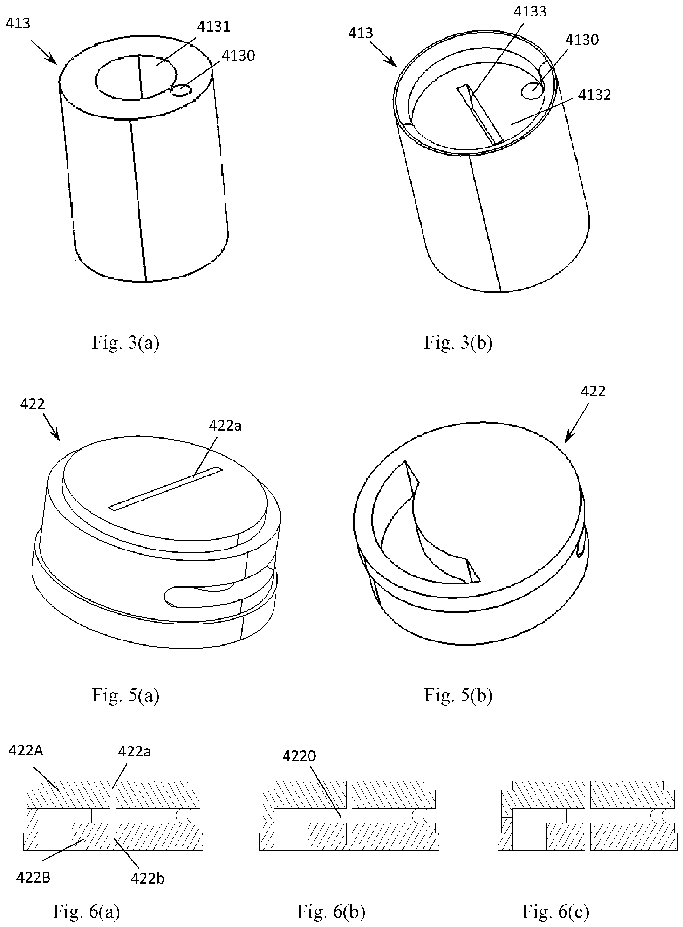

With reference to Figs. 2(a), 2(b), 3(a) and 3(b), the armature 413 is provided with a through hole 4130 extending in the axial direction Z, such that the internal space C is in fluid communication with a space where the through-flow assembly 42 is located. The arrangement aims to avoid a pressure difference between upper and lower spaces of the armature 413, thus influencing a magnitude of an effective electromagnetic force actually acting on the through-flow assembly. An side of the armature 413 is provided with a recess 4131 configured to receive the spring 414/414'. Another opposite side of the armature in the axial direction Z is provided with a groove 4132, such that the phenomenon that the armature 413 moves close to adjacent parts and causes movement adhesion due to the working fluid existing therebetween is avoided. On an side of the armature 413 facing the through-flow assembly 42 may be provided with a receiving part 4133 extending away from the through-flow assembly 42 in the axial direction, so as to receive a moving member (described in detail below) in the through-flow assembly 42. The receiving part 4133 is shown in a form of a cut in Fig. 3(b), which does not limit the invention, as long as the receiving part and the moving member may match each other. Optionally, the receiving part 4133 may even be omitted (with reference to Fig. 2(b)). In this case, the moving member may be directly fixed to a side of the armature 413 facing the through-flow assembly 42.

Further, although the axial through hole 4130 is shown herein as deviating from a center of the armature 413, the through hole may also be a central through hole, a position of which may also be changed relative to the receiving part 4133. For instance, the axial through hole 4130 is provided at an end of the receiving part 4133, or even in fluid communication with the receiving part, as long as the axial through hole 4130 may enable fluid communication between the internal space C and the space where the through-flow assembly 42 is located. A position and a sectional shape of the through hole may have any suitable structure.

It should be understood by those skilled in the art that the electromagnetic valve assembly 41 may be of other structures different from those shown in the drawings, as long as the electromagnetic valve assembly may apply an appropriate axial force to the through-flow assembly 42 in a controlled manner.

The through-flow assembly 42 mainly includes a moving member 421 and a valve body 422. In order to obtain higher response sensitivity of an electromagnetic valve, it is desirable that the moving member 421 is a light-weight part made of light materials (for instance, a special-shaped steel sheet shown in Fig. 4), and has sufficient strength to withstand oil pressure of working fluid on both sides without deformation.

With reference to Fig. 4, the moving member 421 may be in a form of a sliding sheet. A first portion 4211 and a second portion 4212 of the moving member 421 may be formed separately and then fixed to each other. Preferably, as shown in the figure, the two portions of the moving member 421 are integrally formed from a single sheet of material through suitable processes such as stamping and cutting. The second portion 4212 is provided with a through hole 4212a. The through hole 4212a may be in a form of a single through hole or an array of a plurality of through holes. In addition, opening directions of the plurality of through holes may be parallel to each other or form an angle with each other, as shown in Fig. 6 (c).

Although the moving member is shown as a sheet in the figure, those skilled in the art may conceive of using a moving member having another structure. For instance, a sectional shape of the moving member in a direction perpendicular to the axial direction Z may be rectangular, circular, elliptical, polygonal, etc., and the moving member may be solid or hollow.

An end of the first portion 4211 of the moving member 421 away from the second portion 4212 (that is, away from the valve body 422) may be inserted into the receiving part 4133 of the armature 413, and the first portion and the receiving part match each other. Then, the moving member 421 and the armature 413 are fixed to each other in a manner such as a welding manner, so as to implement linkage therebetween. Optionally, the end of the moving member 421 may be directly fixed to a side of the armature 413 facing the moving member 421 in a manner such as a welding manner, as shown in Fig. 2(b). In a case that the electromagnetic force shown in Fig. 2(b) is downward, the lower spring 414' may be arranged around a portion, extending into the electromagnetic valve assembly 41, of the first portion 4211 of the moving member 421. As shown in Fig. 4, a width (a maximum size measured in a direction transverse to the axial direction Z) of the first portion 4211 of the moving member 421 is smaller than a width (defined as above) of the second portion 4212, such that arrangement of the lower spring 414' is facilitated. In a case that the electromagnetic force shown in Fig. 2(a) is upward, the first portion 4211 and the second portion 4212 of the moving member 421 may have a same width. Those skilled in the art may conceive that arrangement of the moving member 421 is not limited to the above manner. In other words, the moving member 421 may deviate from a center of the valve core assembly 4.

Figs. 5(a) and 5(b) show solid diagrams of one instance of the valve body 422 of the through-flow assembly 42 from a top view and a bottom view, respectively. The valve body 422 is provided with a fluid channel 4220 (optimally shown in Figs. 2(a) and 2(b)). The fluid channel 4220 includes a radial section 4221 extending in a radial direction and an axial section 4222 extending in the axial direction Z, respectively. A first end of the radial section 4221 is in fluid communication with the sheath through hole 401. A second end, opposite the first end, of the radial section 4221 is in fluid communication with a first end of the axial section 4222 facing the electromagnetic valve assembly 41. A second end, opposite the first end, of the axial section 4222 is in fluid communication with space K below the valve body 422. Opening shapes of the first end of the radial section 4221 and the second end of the axial section 4222 are shown in Figs. 5(a) and 5(b), and are not limited by the invention.

The radial section 4221 of the fluid channel 4220 divides the valve body 422 into an upper section 422A and a lower section 422B. The two sections may be integrally formed, as shown in Figs. 2(a) and 2(b). Optionally, the upper section 422A and the lower section 422B may be formed separately and then assembled together. Optionally, the radial section 4221 may be completely arranged in the lower section 422B (as shown in Fig. 6(a)), completely arranged in the upper section 422A (as shown in Fig. 6(b)), or composed of grooves provided in the upper section 422A and the lower section 422B (as shown in Fig. 6(c)). Other feasible structures that may be conceived by those skilled in the art are possible.

With reference to Figs. 6(a), 6(b) and 6(c), the upper section 422A is provided with a through hole 422a penetrating the upper section 422A and extending in the axial direction Z, and the through hole 422a is configured to allow at least the second portion 4212 of the moving member 421 to enter the fluid channel 4220 through the through hole 422a. A receiving part 422b is arranged in the lower section 422B, and is configured to receive an end of the moving member 421 away from the electromagnetic valve assembly 41. The receiving part 422b may be in a form of a recess (with reference to Figs. 6(a) and 6(b)) or a through hole (with reference to Fig. 6(c)). It should be noted that once the moving member 421 is inserted into the receiving part 422b of the valve body 42, no working fluid flows between the moving member 421 and the through hole 422a and between the moving member and the receiving part 422b (that is, no working fluid flows therebetween).

After the moving part 421 is inserted into the through hole 422a to reach the receiving part 422b, when the moving member 421 is at an appropriate position (that is, a minimum through-flow position, at which the through hole 4212a on the second portion 4212 of the moving member 421 may be completely blocked by a wall surface of the upper section 422A or the lower section 422B), the moving member 421 may completely block flowing of the working fluid in the fluid channel 4220. When the moving member 421 is at another appropriate position, the through hole 4212a may be completely opposite the fluid channel 4220 (that is, at a maximum through-flow position, where the through hole 4212a is not blocked by wall surfaces of the upper section 422A and the lower section 422B). As the armature 413 drives the moving member 421 to move upward or downward in the axial direction Z, a size of a blocked area of the through hole 4212a may be changed, such that a size of a through-flow section of the fluid channel 4220 is changed, and a damping force is adjusted.

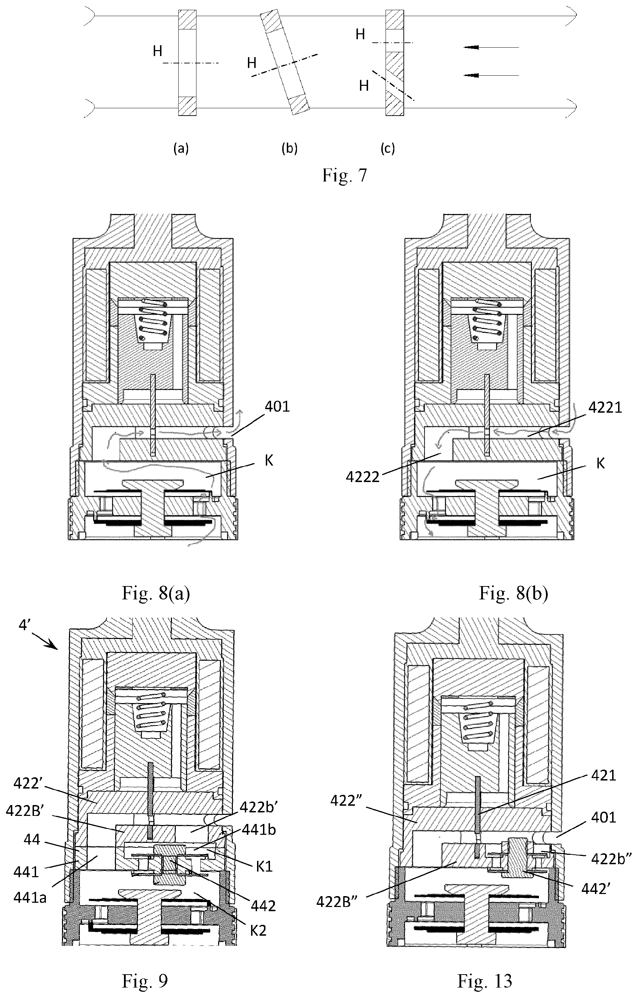

The arrangement of the moving member 421 relative to the flowing channel 4220 has various possibilities. With reference to Fig. 7, regardless of a hole-forming direction H (that is, an axial direction of the through hole 4212a) of the moving member 421, the moving member 421 may be arranged perpendicular to a flowing direction (shown by a horizontal arrow in Fig. 7) of the working fluid, such that the hole-forming direction H is consistent with or parallel to the flowing direction of fluid, or may form a certain angle, which may be selected by those skilled in the art according to actual needs. The fluid channel 4220 is shown as a straight-line type in Fig. 7, which is only shown as an instance and is not intended to limit the fluid channel.

Although not shown in the figure, those skilled in the art may conceive that a reinforcing rib may be arranged in the fluid channel to improve strength of the valve body 42 and guide the working fluid.

Figs. 8(a) and 8(b) show flowing cases of the working fluid in the valve core assembly 4 when the valve core assembly 4 is in travel compression and travel recovery processes, respectively.

When the electronically-controlled shock absorber is in the travel compression process, as shown in Fig. 8(a), the working fluid flows from the space B shown in Fig. 1 into the space K above the piston assembly 43 through the piston assembly 43, and then flows into the space A sequentially through the axial section 4222 and the radial section 4221 of the fluid channel 4220 (by penetrating the through hole 4212a of the moving member 421) and the sheath through hole 401 of the valve core sheath 40.

When the electronically-controlled shock absorber is in the travel recovery process, as shown in Fig. 8(b), the working fluid flows from the space A into the space K sequentially through a radial through hole 401 of the valve core sheath 40, the radial section 4221 of the fluid channel 4220 (by penetrating the through hole 4212a of the moving member 421) and the axial section 4222, and then flows into the space B shown in Fig. 1 through the piston assembly 43.

It may be seen that the working fluid may flow in a same flowing path defined in the through-flow assembly 42 in the travel recovery and travel compression processes.

The electromagnetic valve assembly 40 in the valve core assembly 4 may be operated to apply the electromagnetic force, and the armature 413 may move to drive the moving member 421 to reciprocate in the axial direction Z, such that a position of the through hole 4212a of the moving member 421 relative to the flowing channel 4220 in the through-flow assembly 42 may be changed. Further, the size of the through-flow section of the flowing channel 4220 is changed, thus implementing adjustment of the damping force. It should be noted that an initial position of the moving member 421 relative to the fluid channel 4220 (that is, a position of the electromagnetic valve assembly 41 in a powered-off state) may be preset by changing axial sizes of the armature 413 and the moving member 421 and a magnitude of a spring preloading force. For instance, positions shown in Figs. 2(a) and 2(b) may be used as the initial position, at which the through-flow section is largest. After the electromagnetic force is applied, as the armature 413 and the moving member 421 move upward/downward, the size of the through-flow section gradually decreases. As mentioned above, the axial sizes of the armature 413 and the moving member 421 or the spring preloading force are/is adjusted, such that the initial position may be set to the limit case where the through hole 4212a of the moving member 421 is completely blocked by a wall of the upper section 422A or the lower section 422B of the valve body 422. In this case, since the flowing channel 4220 is completely blocked by the moving member 421, an area of the through-flow section obtained is zero. As the armature 413 powered on moves upward/downward in the axial direction, the through-flow section gradually increases, resulting in a gradual decrease in the damping force.

In consideration of the above limit case, a normal through hole may be provided in the valve core assembly 4, so as to enable permanent (direct or indirect) fluid communication between the space A with the space B or the space K. A size and a position of the normal through hole may be determined by those skilled in the art according to a conventional arrangement.

On the basis of a basic configuration of any one of the embodiments of the valve core assembly, when the moving member 421 in the through-flow assembly 42 moves to a limit state (that is, the minimum through-flow state), the damping force of the valve core assembly 4 presents a large force value due to a small through-flow section in both the travel recovery process and the travel compression process. For some vehicles with high comfort requirements, a large damping force is **needed** in the recovery travel, so as to improve performance, and it is desirable that the damping force in the compression travel is relatively small to improve comfort. In order to further improve an adjustment ability, an adjusting assembly 44 is arranged accordingly.

Fig. 9 shows a sectional view of another embodiment of the valve core assembly shown in Fig. 2(a). A valve core assembly 4' shown in Fig. 9 and the valve core assembly 4 shown in Fig. 2(a) are mainly different in that a lower section 422B' of a valve body 422' of a through-flow assembly of the valve core assembly 4' is provided with at least one dividing through hole 422b' extending through an entire thickness of the lower section 244B' in the axial direction Z at a side of the receiving part close to the sheath through hole 401, such that the radial section of the valve body 422' is in fluid communication with space K1 below the valve body 422'. **The** valve core assembly 4' is further provided with an adjusting assembly 44. **The** adjusting assembly 44 is arranged between the through-flow assembly 42 and the piston assembly 43 and adjacent to them.

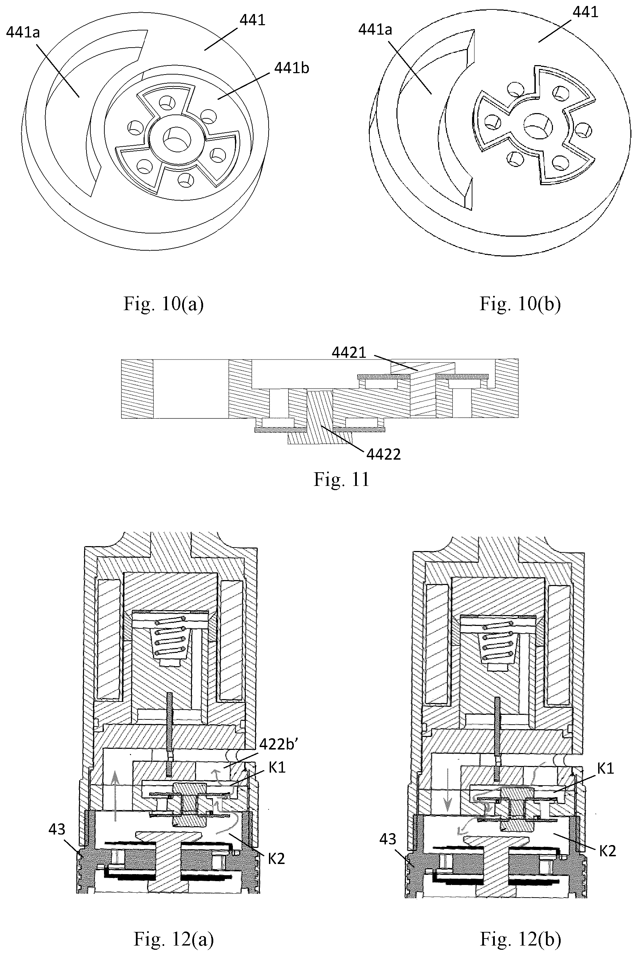

**The** adjusting assembly 44 includes a main body 441 and an adjusting mechanism 442. With reference to Figs. 10(a) and 10(b), the main body 441 is provided with a flowing hole 441a. **The** flowing hole 441a extends through an entire thickness of the adjusting assembly 44 (specifically, the main body 441) in the axial direction Z at a position deviating from the center of the adjusting assembly 44, and the axial section 4222 of the flowing channel 4220 is in fluid communication with space K2 below the adjusting assembly 44. Preferably, a shape of an opening of the flowing hole 441a facing the through-flow assembly 42 is consistent with a shape of an opening of the axial section 4222 facing the adjusting assembly 44. A sectional shape of the flowing hole 441a is shown as a crescent shape in Figs. 10(a) and 10(b), which does not limit the invention.

In addition, a second zone without the flowing hole 441a of the main body 441 is provided with a recess 441b. The recess 441b is recessed on a side of the main body 441 facing the through-flow assembly 422'. In the recess 441b, at least two dividing through holes are provided through a thickness of the main body 441 in the axial direction. The adjusting mechanism 442 is arranged in the recess 441b, and located below at least one dividing through hole 422b' of the valve body 422'. The adjusting mechanism 442 includes a first assembly 4421 arranged above the main body 441 and a second assembly 4422 arranged below the main body 441. The first assembly 4421 acts on a first group of dividing through holes of the main body 441, such that a flow blocking function (preventing the working fluid from flowing through the first group of dividing through holes) may be achieved in the travel recovery process of the electronically-controlled shock absorber, and a flow dividing function (allowing the working fluid to flow through the first group of dividing through holes) may be achieved in the travel compression process. Similarly, the second assembly 4422 acts on a second group of dividing through holes of the main body 441 other than the first group of dividing through holes, such that a flow blocking function (preventing the working fluid from flowing through the second group of dividing through holes) may be achieved in the travel compression process of the electronically-controlled shock absorber, and a flow dividing function (allowing the working fluid to flow through the second group of dividing through holes) may be achieved in the travel recovery process. When the first assembly 4421 and the second assembly 4422 are coaxially mounted (as shown in Figs. 11(a) and 11(b)), structures of the first assembly and the second assembly are similar to a structure of the piston assembly 43. Since the piston assembly 43 is a common structure in the field, a structure of the adjusting mechanism 442 will not be described herein.

Optionally, the first assembly 4421 and the second assembly 4422 may be arranged in a manner of deviating from each other, as shown in Fig. 11.

A working principle of the adjusting assembly 44 will be described below with reference to Figs. 12(a) and 12(b) as follows:
When the electronically-controlled shock absorber is in the travel compression process, as shown in Fig. 12(a), the valve core assembly 4' moves downward, and the working fluid is forced to flow from the space B into the space K2 above the space B through the piston assembly 43. Then, a part of the working fluid flows into the axial section of the through-flow assembly 422' through the flowing hole 441a in the main body 441 of the adjusting assembly 44, and then flows into the space A through the radial section of the through-flow assembly 442' (by penetrating the through hole 4212a of the moving member 421) and the sheath through hole 401 of the valve core sheath 40. Meanwhile, another part of the working fluid may flow into the adjusting mechanism 442 to act on the first assembly 4421 so as to flow into the space K1 through the main body 441, then flow through at least one dividing through hole 422b' in the valve body 422', then flow into the radial section of the through-flow assembly 422', and finally flow into the space A. The flowing path followed by the another part of the working fluid forms a dividing path in a compression travel.

When the electronically-controlled shock absorber is in the travel recovery process, as shown in Fig. 12(b), the valve core assembly 4' moves upward, and the working fluid is forced to flow from the space A into the radial section of the valve body 422' through the sheath through hole 401 (by penetrating the through hole 4212a of the moving member 421), flows into the space K2 above the piston assembly 43 through the axial section of the valve body 422' by penetrating the flowing hole 441a in the main body 441 of the adjusting assembly 44, and then flows into the space B through the piston assembly 42. Meanwhile, another part of the working fluid may flow into the space K1 above the adjusting mechanism 442 through at least one dividing through hole 422b' in the valve body 422' before flowing through the moving member 421 in the radial section of the valve body 422', and then act on the second assembly 4422 in the adjusting mechanism 442, so as to flow into the space K2 through the main body 441 and finally flow into the space B through the piston assembly 43. The flowing path followed by the another part of the working fluid forms a dividing path in a recovery travel.

The piston assembly 43 (for instance, parameters such as thickness and stiffness of a valve plate) may be selected to control a magnitude of a minimum damping force of the electronically-controlled shock absorber 10 when the moving member 421 moves to reach a maximum through-flow state. The adjusting mechanism 442 (for instance, parameters such as thickness and stiffness of valve plates of the first assembly 4421 and the second assembly 4422) of the adjusting assembly 44 may be selected to control a magnitude of a maximum damping force of the electronically-controlled shock absorber 10 when the moving member 421 moves to reach a minimum through-flow state. It may be seen that the adjusting assembly 44 is arranged to further provide a possibility of adjusting the damping force of the electronically-controlled shock absorber 10, such that a better adjustment function may be obtained.

Fig. 13 shows a sectional view of another embodiment of the valve core assembly shown in Fig. 9(a). The valve core assembly shown in Fig. 13 is different from the valve core assembly shown in Fig. 9 only in the arrangement of the adjusting assembly 44'.

In Fig. 13, the adjusting assembly only includes an adjusting mechanism 442' arranged on a lower section 422B" of a valve body 422" and located on a side of the moving member 421 close to the sheath through hole 401. A side of the lower section 422B" facing the radial section is provided with a recess 422b" configured to receive the adjusting mechanism 442', such that influence on flowing of the working fluid in the radial section is minimized. Similar to the adjusting mechanism 442, the adjusting mechanism 442' may also include a first assembly and a second assembly similar to the first assembly 4421 and the second assembly 4422, respectively. The two assemblies may also be arranged coaxially (as shown in Fig. 13) or deviate from each other (not shown in the figure).

Although several examples of the invention are described with reference to the drawings, those skilled in the art understand that various improvements may be made to the above examples without departing from the scope defined by the appended claims. The above examples are only provided as instances to illustrate the technical solution of the invention, and are not intended to limit the protection scope of the invention. Features or elements described in one example may be implemented in another example unless they contradict existing features or elements in another example.

## Claims

1. A valve core assembly for a built-in electronically-controlled shock absorber, comprising:
a valve core sheath, wherein the valve core sheath is provided with a sheath through hole extending in a radial direction of the valve core assembly, so as to enable fluid communication between an internal space and an external space of the valve core sheath;
an electromagnetic valve assembly, wherein the electromagnetic valve assembly is arranged in the valve core sheath;
a through-flow assembly, wherein the through-flow assembly is arranged in the valve core sheath and comprises:
a valve body, wherein a side, in an axial direction of the valve core assembly, of the valve body abuts against the electromagnetic valve assembly, the valve body is detachably fixed relative to the valve core sheath, the valve body is provided with a flowing channel, and the flowing channel is in fluid communication with the sheath through hole, such that the external space is in fluid communication with a lower space below the valve body; and
a moving member, wherein the moving member extends in the axial direction in a fluid-tight manner and penetrates at least part of the valve body so as to transversely penetrate the flowing channel and is provided with a moving member through hole extending in the radial direction, wherein the moving member is capable of reciprocating in the axial direction under an action of an electromagnetic force generated by the electromagnetic valve assembly, such that a size of a through-flow section of the flowing channel of the valve body is changed; and
a piston assembly, wherein the piston assembly abuts against a side of the valve body away from the electromagnetic valve assembly and is detachably fixed relative to the valve core sheath, such that working fluid is allowed to penetrate the piston assembly for reciprocation.

2. The valve core assembly according to claim 1, wherein the moving member is in a form of a sliding sheet, the sliding sheet is capable of moving between a maximum through-flow position and a minimum through-flow position, when the sliding sheet is located at the maximum through-flow position, the moving member through hole is in complete communication with the fluid channel and is not blocked; and when the sliding sheet is located at the minimum through-flow position, the moving through hole is completely blocked by a wall of the valve body; and/or
the electromagnetic valve assembly comprises:
an armature, wherein the armature is capable of reciprocating in the axial direction under the action of the electromagnetic force, and is provided with an armature through hole extending in the axial direction, such that an upper space of the armature is in fluid communication with the lower space of the armature; and
an elastic member, wherein the elastic member is arranged in the electromagnetic valve assembly, so as to apply a force opposite to the electromagnetic force to the armature, wherein
a first end of the moving member in the axial direction is fixedly connected to the armature.

3. The valve core assembly according to claim 2, wherein a side of the armature facing the valve body is provided with a receiving part configured to receive the first end of the moving member in a fixed manner; or
the first end of the moving member is directly fixed to a side of the armature facing the valve body.

4. The valve core assembly according to claim 2, wherein the armature through hole deviates from an axis of the valve core assembly, or the armature through hole is a central through hole of the armature.

5. The valve core assembly according to any one of claims 1-4, wherein the moving member through hole is a single through hole, or a through hole array composed of a plurality of through holes; and/or,
a hole-forming direction of the moving member through hole and a flowing direction of the working fluid in the flowing channel are parallel to each other or form an angle.

6. The valve core assembly according to any one of claims 1-4, wherein the flowing channel of the valve body comprises:
a radial section, wherein the radial section extends in the radial direction and is provided with a first end in fluid communication with the sheath through hole, and the radial section divides the valve body into an upper section located above the radial section and a lower section located below the radial section; and
an axial section, wherein the axial section extends in the axial direction and is provided with a first end in fluid communication with a second end, opposite the first end, of the radial section and a second end in fluid communication with the lower space below the valve body.

7. The valve core assembly according to claim 6, wherein the moving member extends in the axial direction and penetrates the valve body; or
a second end, opposite the first end, of the moving member is received in a recess of the valve body, and the recess is provided on the lower section.

8. The valve core assembly according to claim 6, wherein the lower section of the valve body is provided with at least one dividing through hole extending in the axial direction on a side of the moving member close to the sheath through hole, and each of the at least one dividing through hole enables fluid communication between the radial section and the lower space below the valve body; and
the valve core assembly further comprises an adjusting assembly, the adjusting assembly abuts against a side of the valve body facing away from the electromagnetic valve assembly, and the adjusting assembly comprises:
a main body, wherein the main body is provided with a flowing hole deviating from a center of the main body, and the flowing hole extends in the axial direction to penetrate the main body, and is in fluid communication with the axial section of the flowing channel; and
an adjusting mechanism, wherein the adjusting mechanism is located below the at least one dividing through hole, and capable of enabling fluid communication between a space below the adjusting assembly and the at least one dividing through hole in a same mode as a working mode of the piston assembly.

9. The valve core assembly according to claim 8, wherein the main body of the valve body is provided with a recess at a position without the flowing hole, the recess is concave relative to a side of the valve body facing the electromagnetic valve assembly, and the adjusting mechanism is arranged at the recess.

10. **The** valve core assembly according to claim 6, wherein the lower section of the valve body is provided with an adjusting mechanism on a side of the moving member close to the sheath through hole, and the adjusting mechanism is capable of enabling fluid communication between a space below the adjusting mechanism and the radial section in a same mode as a working mode of the piston assembly.

11. **The** valve core assembly according to claim 10, wherein a side of the lower section of the valve body facing the radial section is provided with a recess, and the recess is configured to arrange the adjusting mechanism.

12. **The** valve core assembly according to any one of claims 8-11, wherein the adjusting mechanism comprises:
a first assembly, wherein the first assembly is capable of achieving a flow blocking function in a travel recovery process of the electronically-controlled shock absorber and a flow dividing function in a travel compression process of the electronically-controlled shock absorber; and
a second assembly, wherein the second assembly is located below the first assembly, and the second assembly is capable of achieving a flow blocking function in the travel compression process and a flow dividing function in the travel recovery process, wherein
the second assembly and the first assembly are fixed to the main body along a same axis, or are fixed to the main body in a mutually-deviating manner.

13. A built-in electronically-controlled shock absorber, comprising:
a cylinder tube;
the valve core assembly according to any one of the claims, wherein the valve core assembly is arranged such that at least part of an outer wall of a piston assembly is in close contact with an inner wall of the cylinder tube, and further the valve core assembly is switched back and forth between a compression travel and a recovery travel of the electronically-controlled shock absorber relative to the cylinder tube; and
a hollow piston rod, wherein the hollow piston rod is connected with the valve core assembly, and a power line penetrates a hollow rod cavity of the hollow piston rod and is configured to supply power to an electromagnetic valve assembly of the valve core assembly.
